# EUROPÄISCHE PATENTSCHRIFT

(11) **EP 4 021 719 B1**
(45) Veröffentlichungstag und Bekanntmachung des Hinweises auf die Patenterteilung: **17.09.2025**
(21) Anmeldenummer: 20727827.6
(22) Anmeldetag: 29.05.2020
(51) Int. Cl.: B32B 17/06, B32B 17/10, B32B 27/30, B32B 27/36

(54) **VERBUNDGLASSCHEIBE MIT EINEM ELEKTRONISCHEN FUNKTIONSMODUL**
LAMINATED GLASS PANE COMPRISING AN ELECTRONIC FUNCTIONAL MODULE
VITRE EN VERRE FEUILLETÉ DOTÉE D'UN MODULE FONCTIONNEL ÉLECTRONIQUE

(30) Priorität: 26.08.2019 EP 19193533
(43) Veröffentlichungstag der Anmeldung: 06.07.2022
(73) Patentinhaber: Saint-Gobain Sekurit France, 60150 Thourotte (FR)
(72) Erfinder: EFFERTZ, Christian, 52080 Aachen (DE); BOTTOIS, Clément, 52064 Aachen (DE); WEBER, Patrick, 52477 Alsdorf (DE)
(74) Vertreter: Feist, Florian Arno
(86) Internationale Anmeldenummer: PCT/EP2020/064958
(87) Internationale Veröffentlichungsnummer: WO 2021/037404

(56) Entgegenhaltungen:
- WO-A1-2012/031647
- WO-A1-2016/162251
- WO-A1-2017/103426
- WO-A1-2019/150037
- DE-A1- 102005 006 862

## Beschreibung

Die Erfindung betrifft eine Verbundglasscheibe mit einem elektronischen Funktionsmodul, ein damit ausgestattetes Fahrzeug sowie ein Verfahren zu ihrer Herstellung.

In Kraftfahrzeugen und bei Gebäuden spielt die Erfassung von Zuständen oder Parametern der Umgebung für den sicheren und effizienten Betrieb eine immer größere Rolle. Moderne PKWs ebenso wie hochwertige Gebäude sind daher mit einer Vielzahl von Sensoren ausgestattet, die relevante Umgebungszustände oder -parameter erfassen und die aktuellen Werte an Verarbeitungs- und Steuereinheiten liefern, die Funktionen des Fahrzeugs oder Gebäudes steuern. Dies gilt im Übrigen nicht nur für Kraftfahrzeuge, sondern in gewissem Maße auch für bestimmte Wasser-, Schienen und Luftfahrzeuge.

Gewisse Sensoren lassen sich vorteilhaft auf oder in der Frontscheibe oder ggf. auch der Heckscheibe, den Seitenscheiben oder einer Glasdacheinheit eines PKW unterbringen. Entsprechende Anordnungen sind seit Langem für sog. Regensensoren bekannt, über die Scheibenwischerfunktionen des Fahrzeugs gesteuert werden. Im Rahmen des allgemeinen Trends zur weitestgehend kompletten Vorfertigung von Fahrzeugkomponenten gibt es Entwicklungen, die auf eine Integration entsprechender Sensoren in eine vorgefertigte Verglasungseinheit (etwa Front- oder Heckscheibe) eines Fahrzeugs abzielen. Entsprechende Lösungen sind in der WO2019057574 erwähnt.

Fahrzeugscheiben mit integrierten oder teil-integrierten Sensoren sind im Übrigen aus der EP 2 121 308 B1 oder der CN 101 087 135 A bekannt. Aus der DE 10 2004 054 465 A1 ist ein optischer Feuchtigkeitssensor zur Detektion von Feuchtigkeit auf der Außenseite und/oder der Innenseite einer Kraftfahrzeugscheibe bekannt, der in die PVB-Folie integriert ist, mit der die beiden Scheiben der Verbundglasscheibe miteinander verbunden sind. Weiterhin ist aus der WO 2015/162107 A1 ein Glaspanel mit einer beleuchteten Schaltfläche und Heizfunktion bekannt.

WO2019150037A1 offenbart ein OLED-Funktionsmodul auf einer Leiterplatte innerhalb einer Verbundscheibe, das über ein Kunststoffband an einer der Glasscheiben angebracht ist, In ähnlicher Weise offenbart WO2017103426A1 ein OLED-Funktionsmodul auf einer Leiterplatte innerhalb einer Verbundscheibe.

DE202015009229U1 und DE102013003686A1 offenbaren LED-Funktionselemente auf Leiterplatten innerhalb einer Verbundscheibe. WO2017097536A1 offenbart Photodioden auf einer Leiterplatte innerhalb einer Verbundscheibe. DE102005006862A1 offenbart einen kapazitiven Regensensor für Fahrzeuge, der aus spiralartigen Leiterstrukturen aufgebaut ist. Auch WO2020064297A1 offenbart ein Funktionsmodul innerhalb einer Verbundscheibe.

Die elektronischen Funktionselemente werden typischerweise innerhalb eines Ausschnitts einer Verbindungsfolie der Verbundscheibe angeordnet, um die Dicke des Funktionselementes in den umliegenden Bereichen zu kompensieren.

Es hat sich auch herausgestellt, dass das unvermeidliche Fließen der Verbindungs-Polymerfolie oder des Verbindungs-Laminats zwischen den beiden Scheiben der Verbundglasscheibe mechanische Einflüsse auf ein zwischen den Scheiben angeordnetes elektronisches Funktionselement ausüben kann, die zu einer Verschlechterung von dessen Leistungsfähigkeit und/oder Zuverlässigkeit führen. Dieses Problem tritt insbesondere dann auf, wenn das eigentliche Funktionselement von dünnen, eng benachbarten Leiterstrukturen umgeben ist, welche besonders empfindlich sind.

Der Erfindung liegt daher die Aufgabe zu Grunde, eine verbesserte Verbundglasscheibe sowie ein verbessertes Verfahren zu deren Herstellung anzugeben, die dazu geeignet sind, eine uneingeschränkte Leistung und Zuverlässigkeit des eingebetteten elektronischen Funktionsmoduls auch nach Durchlaufen des erforderlichen Laminierungsprozesses zu gewährleisten.

Diese Aufgabe wird in ihrem Vorrichtungsaspekt durch eine Verbundglasscheibe mit den Merkmalen des Anspruchs 1 und in ihrem Verfahrensaspekt durch ein Verfahren mit den Merkmalen des Anspruchs 12 gelöst. Zweckmäßige Fortbildungen des Erfindungsgedankens sind Gegenstand der jeweiligen abhängigen Ansprüche.

Die Erfindung schließt den Gedanken ein, das in die Verbundglasscheibe zu integrierende elektronische Funktionsmodul, das mindestens ein elektronisches Funktionselement umfasst, von der die erste und zweite Glas- oder Polymerscheibe verbindenden Zwischenschicht (Verbindungs-Polymerfolie bzw. Verbindungs-Laminat) mechanisch weitestgehend zu entkoppeln. Dieser Gedanke wird dahingehend weitergeführt, dass diese mechanische Entkopplung am einfachsten durch eine geometrische Trennung, also die Schaffung eines Abstandes, zwischen dem Funktionsmodul und der Zwischenschicht zu erreichen ist.

Sie schließt weiter den Gedanken ein, hierfür in einem Teil-Flächenbereich der Verbundglasscheibe einen Ausschnitt der Polymerfolie oder des Folien-Laminats vorzusehen, der den lateralen Abmessungen des Funktionsmoduls entspricht oder diese übersteigt. Des Weiteren ist erforderlich, dass das Funktionsmodul mit einer Dicke erzeugt wird, die höchstens gleich der Dicke der Polymerfolie oder des Folien-Laminats ist, damit der Inline-Prozess mit den üblicherweise hierbei eingesetzten Polymerfolien bzw. Folien-Laminaten ablaufen kann.

Schließlich wird vorgeschlagen, das Funktionselement des elektronischen Funktionsmoduls auf einer separaten dünnen Träger-Polymerfolie, insbesondere mit einer Dicke im Bereich zwischen 30 und 70 µm, auf einer der Glas- oder Polymerscheiben zu fixieren.

Die erfindungsgemäße Verbundglasscheibe weist zwei Glas- oder Polymerscheiben und mindestens eine zwischen diese eingeklebte Verbindungs-Polymerfolie oder ein Verbindungs-Laminat auf. Zwischen den beiden Glas- oder Polymerscheiben ist außerdem ein elektronisches Funktionselement angeordnet. In einem Teil-Flächenbereich der Verbundglasscheibe ist ein Ausschnitt der Verbindungs-Polymerfolie oder des Verbindungs-Laminats vorgesehen, in dem ein elektronisches Funktionsmodul untergebracht. Das Funktionsmodul weist eine Dicke auf, die kleiner oder gleich der Dicke der Verbindungs-Polymerfolie oder des Verbindungs-Laminats ist. Die Dicke des Funktionsmoduls ist bevorzugt kleiner als die Dicke der Polymerfolie oder des Folien-Laminats. Das Funktionsmodul weist das elektronische Funktionselement auf beziehungsweise enthält dieses. Das Funktionselement ist auf einer separaten dünnen Träger-Polymerfolie, insbesondere mit einer Dicke im Bereich zwischen 30 und 70 µm, auf einer der Glas- oder Polymerscheiben fixiert. Die Trägerfolie ist also zwischen dem Funktionselement und der besagten Glas- oder Polymerscheibe angeordnet und verbindet diese miteinander. Die Träger-Polymerfolie ist bevorzugt direkt an der besagten Glas- oder Polymerscheibe angebracht ist, also ohne Zwischenlage einer weiteren Polymerfolie.

Das Funktionsmodul umfasst zumindest das Funktionselement und die Trägerfolie. Das Funktionsmodul umfasst auch eine Antenne.

Bei den erwähnten Polymerfolien, sowohl der Verbindungs-Polymerfolie bzw. den Folien eines Verbindungs-Laminats zur Verbindung der beiden Scheiben als auch bei der Träger-Polymerfolie des Funktionsmoduls, kann es sich insbesondere um an sich bekannte PVB-Folien handeln. PVB-Folien (Polyvinylbutyral) mit einer solch geringen Dicke, wie sie hier als Träger-Polymerfolie des Funktionsmoduls vorgeschlagen werden, werden allerdings auf dem technischen Gebiet bislang nicht eingesetzt. Grundsätzlich ist im Kontext der Erfindung aber auch der Einsatz von Folien aus anderen Polymeren möglich, beispielsweise EVA (Ethylenvinylacetat) oder PU (Polyurethan).

Die Verbundglasscheibe umfasst erfindungsgemäß zwei Glas- oder Polymerscheiben. Für Glasscheiben eignet sich insbesondere Kalk-Natron-Glas, das für Fensterscheiben üblich ist. Geeignete Polymere sind Polycarbonat und Polymethylmethacrylat.

In der Erfindung ist das Funktionselement zusammen mit einer Antenne, welche eng benachbarte Leiterzüge umfasst, auf der Träger-Polymerfolie angeordnet. Die Antenne umgibt das elektronische Funktionselement insbesondere mindestens abschnittsweise. Die Antenne weist einen spiralförmigen oder eckig-spiralförmigen Leiterzug auf oder ist als solcher ausgebildet, der das Funktionselement umgibt.

Das elektronische Funktionselement als auch die Antenne sind vollständig innerhalb des Ausschnitts der Verbindungs- Polymerfolie oder des Verbindungs-Laminats angeordnet. Die Verbindungs-Polymerfolie oder das Verbindungs-Laminat überlappen also weder mit dem Funktionselement noch mit der Antenne und/oder Leiterstruktur, wodurch insbesondere die empfindliche Antenne und/oder Leiterstruktur bei der Herstellung des Verbundglasscheibe geschont werden.

Gemäß der Erfindung ist die Antenne auf die Träger-Polymerfolie aufgedruckt. Hierfür kann ein an sich bekanntes Druckverfahren wie der Siebdruck einer leitfähigen Paste oder der Inkjet-Druck einer leitfähigen Tinte, jeweils mit nachgeordnetem thermischem Bearbeitungsschritt, eingesetzt werden.

Gemäß der Erfindung ist im Ausschnitt zwischen dem Funktionselement und der anderen der Glas- oder Polymerscheiben eine dünne Schutz-Polymerfolie, insbesondere mit einer Dicke im Bereich zwischen 30 und 70 µm, angeordnet. Diese Schutzfolie dient dazu, die Einleitung unerwünschter Kräfte in das Funktionsmodul durch die über diesem liegende Glas- oder Polymerscheibe abzumildern und erscheint insbesondere beim Einsatz von Funktionsmodulen als sinnvoll, deren Dicke nahezu dem Scheibenzwischenraum entspricht. Die Schutz-Polymerfolie ist bevorzugt direkt an der besagten Glas- oder Polymerscheibe angebracht ist, also ohne Zwischenlage einer weiteren Polymerfolie.

Im Sinne der vorliegenden Erfindung ist der Begriff "elektronisches Funktionsmodul" in einem breiten Sinne zu verstehen, der ein Sensorik-Modul (beispielsweise Regen- bzw. Luftfeuchtigkeits- oder auch Lichtsensor-Modul), Anzeige-Modul (beispielsweise Head-Up-Displaymodul in der Frontscheibe), Kommunikationsmodul (beispielsweise Antennen- oder integriertes Funk-Modul) sowie Kombinationen der genannten Funktionseinheiten miteinander oder mit anderen, hier nicht erwähnten Funktionseinheiten einschließt. In aus derzeitiger Sicht bedeutungsvollen Realisierungen umfasst das elektronische Funktionsmodul also mindestens eine der folgenden Funktionselemente: einen Feuchtigkeitssensor, einen Lichtsensor, einen Temperatursensor, eine Antenne, einen Aktuator, eine elektronische Verarbeitungs- oder Schalteinheit, eine LCD-Anzeigeeinheit und eine LED-Anzeigeeinheit. Insbesondere kann mehr als eine Funktionseinheit aus dieser Gruppe enthalten sein.

Besondere Bedeutung hat aus derzeitiger Sicht eine Ausführung, bei der das Funktionsmodul einen Temperatursensor als Funktionselement mit einer diesen umgebenden Antenne umfasst, welche einen spiralförmigen oder eckig-spiralförmigen Leiterzug aufweist.

In aus derzeitiger Sicht besonders praktikablen Ausführungen hat das Funktionselement die Form eines flachen Prismas, insbesondere eines flachen Quaders, oder einer flachen Kreisscheibe. Die Erfindung ist jedoch hierauf nicht beschränkt; vielmehr kann sie auch mit unregelmäßig geformten sowie mit nicht vollständig von einem Gehäuse umschlossenen elektronischen Funktionseinheiten ausgeführt werden. Typischerweise weist jedoch das Funktionselement eine größere Dicke auf als die umgebende Antenne.

Gemäß den etablierten Technologien der Herstellung von Verbundglasscheiben speziell für Straßenfahrzeuge sind in bevorzugten Ausführungen der Erfindung die Dicke der Polymerfolie oder des Folien-Laminats und des elektronischen Funktionsmoduls kleiner als 1,2 mm und insbesondere im Bereich zwischen 0,6 mm und 1,0 mm. Es versteht sich, dass die Erfindung auch in Verbindung mit dickeren Polymerfolien oder Folien-Laminaten nutzbringend einsetzbar ist, wobei sich dann die Unterbringung mehrerer Funktionselemente in einem einzigen Funktionsmodul hinsichtlich der elektrischen Parameter und der Verbindungs- und Einkapselungstechnik einfacher gestalten kann.

Aufgrund von Untersuchungen der Erfinder erscheint eine Ausführung als vorteilhaft, in der die Träger-Polymerfolie an den Rändern des Ausschnitts überlappend mit der Verbindungs-Polymerfolie aufgebracht ist. Der Überlappungsbereich kann, abhängig von der Größe des Ausschnitts in der Verbindungs-Polymerfolie, bevorzugt von 1 mm bis 10 mm betragen, beispielsweise zwischen 2 und 3 mm liegen. Selbiges gilt für die Schutz-Polymerfolie, falls eine solche vorhanden ist. Als sinnvoll erscheint zudem die Einhaltung eines Mindestabstandes zwischen dem äußersten Abschnitt einer Antennen des Funktionsmoduls und dem Außenumfang des Ausschnitts, in dem dieses untergebracht ist. Der Abstand beträgt bevorzugt von 1 mm bis 10 mm, insbesondere von 2 mm bis 5 mm. Mit einem solchen Abstand wird ein "Heranfließen" der umgebenden Verbindungs-Polymerfolie an die Antenne und somit eine mögliche Deformation derselben vermieden.

In aus derzeitiger Sicht wirtschaftlich besonders bedeutsamen Realisierungen ist die erfindungsgemäße Verbundglasscheibe ausgeführt als Frontscheibe oder Heckscheibe oder Seitenscheibe oder Dachverglasung eines Fahrzeugs, wobei der Ausschnitt der Polymerfolie oder des Folien-Laminats und das vorgefertigte elektronische Funktionsmodul an oder nahe einer Kante der Verbundglasscheibe angeordnet sind. Hervorzuheben ist hierbei der massenhafte Einsatz in Straßenfahrzeugen, insbesondere PKWs. Daneben ist aber der Einsatz auch bei anderen Fahrzeugen, etwa in Zügen, Booten, Kleinflugzeugen, Lufttaxis o.ä. möglich. Neben dem Einsatz der Erfindung in Fahrzeugen kann auch ein Einsatz in der Gebäudeverglasung von Nutzen sein. Bei Einsatz transparenter leitfähiger Strukturen ist die Platzierung des elektronischen Funktionsmoduls auch entfernt von Kanten der Verbundglasscheibe möglich. Dies gilt insbesondere auch bei gefärbten Gläsern und für Einsatzbereiche außerhalb der Automobilindustrie.

Bei den vorgenannten Anmeldungen ist es aus Sicht der Erfinder von Vorteil, wenn der Ausschnitt einen Flächenanteil von weniger als 10 %, insbesondere weniger als 5 %, der Fläche der Verbundglasscheibe hat. Mit einem solchen Flächenanteil kann hinreichend die mechanische Stabilität des mit der Verbindungs-Polymerfolie bzw. dem Verbindungs-Laminat gebildeten Verbundes zwischen den beiden Glas- bzw. Polymerscheiben gewährleistet werden.

In Einzelfällen erscheint aber auch eine Überschreitung dieses Flächenanteils als unkritisch.

Dementsprechend betrifft die Verbindung grundsätzlich auch ein Fahrzeug, insbesondere ein Straßenfahrzeug, welches mindestens eine Verbundglasscheibe mit dem erfindungsgemäßen Aufbau hat.

Verfahrensaspekte der Erfindung ergeben sich weitgehend aus den oben erläuterten Vorrichtungsaspekten und werden daher hier nicht nochmals erläutert. Es wird jedoch darauf hingewiesen, dass die Schritte des im Anspruch 12 spezifizierten Verfahrens sowie dessen Ausgestaltungen insoweit modifiziert sein können, als spezielle Ausgestaltungen des erfindungsgemäß vorgesehenen elektronischen Funktionsmoduls dies als sinnvoll erscheinen lassen. Wesentlich hierbei ist, dass die Vorteile, die mit der mechanischen Entkopplung des elektronischen Funktionselements von der Zwischenschicht der Verbundglasscheibe erzielt werden können, durch eine geeignete Verfahrensführung realisiert werden.

Es wird hingewiesen auf das Verfahren gemäß der Erfindung, bei der das Bereitstellen des elektronischen Funktionsmoduls das Versehen der Träger-Polymerfolie mit einer Antenne einschließt, welche eng benachbarte Leiterzüge umfasst, wobei die Antenne das elektronische Funktionselement insbesondere mindestens abschnittsweise umgibt. Schließlich wird noch hingewiesen auf eine aus derzeitiger Sicht vorteilhafte Ausgestaltung, wobei der Schritt des Aufsetzens des elektronischen Funktionselements mit der darunterliegenden Träger-Polymerfolie auf eine Oberfläche der ersten oder zweiten Glas- oder Polymerscheibe, ein Schritt des Abdeckens des elektronischen Funktionselements mit einer dünnen Schutz-Polymerfolie ausgeführt wird.

Herkömmliche Verbundglasscheiben werden in Autoklaven bei hohem Druck laminiert. Es hat sich gezeigt, dass dieses Vorgehen das Funktionselement und insbesondere die empfindliche umgebende Antenne und/oder Leiterstruktur schädigen kann. Um dies zu vermeiden, wird das Laminieren des Verbundes bevorzugt bei einer Temperatur von weniger als 120°C durchgeführt, besonders bevorzugt weniger als 100°C. Das Laminieren erfolgt bevorzugt bei vermindertem Druck ("unter Vakuum"), insbesondere über einen Zeitraum von 2 Stunden bis 20 Stunden. Das Laminieren erfolgt bevorzugt ohne Verwendung eines Autoklaven. Vorteile und Zweckmäßigkeiten der Erfindung ergeben sich im Übrigen aus der nachfolgenden Beschreibung von Ausführungsbeispielen anhand der Figuren. Von diesen zeigen:
- Fig. 1a und 1b: schematische Darstellungen (Draufsicht und Schnittansicht) zu einem Ausführungsbeispiel der Erfindung,
- Fig. 2a und 2b: Detailansichten (Draufsicht und Schnittansicht) zur Anordnung nach Fig. 1a und 1b, und
- Fig. 3: eine schematische Darstellung zur Erläuterung des erfindungsgemäßen Verfahrens.

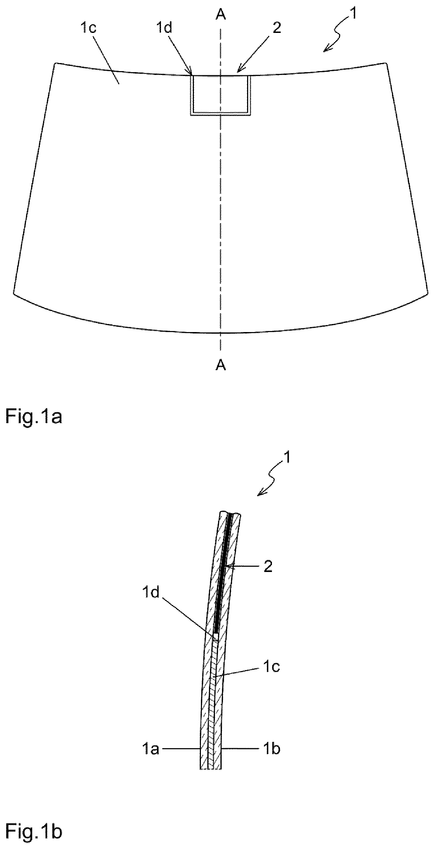

Fig. 1a zeigt schematisch eine Draufsicht einer Verbundglasscheibe 1 als PKW-Frontscheibe gemäß einem Ausführungsbeispiel der Erfindung, und Fig. 1b zeigt eine Schnittansicht derselben längs einer Schnittebene A-A. Die Frontscheibe 1 ist als Verbundglasscheibe mit einer ersten und zweiten Glasscheibe 1a, 1b und einer zwischen die Glasscheiben eingeklebten Polymerfolie 1c gebildet. In einem Bereich nahe der Oberkante der Frontscheibe ist ein Ausschnitt 1d in der Polymerfolie 1c vorgesehen, in dem ein elektronisches Funktionsmodul 2 zwischen die erste und zweite Glasscheibe 1a, 1b eingefügt ist.

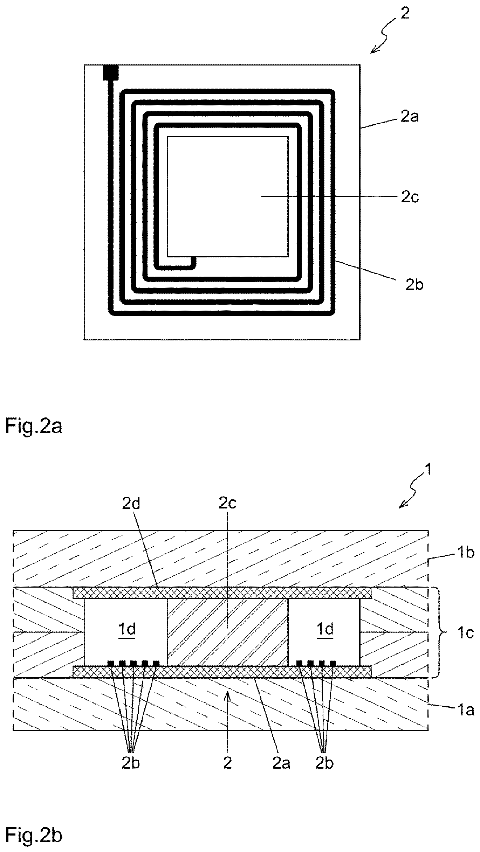

Fig. 2a und 2b zeigen eine Ausführung des elektronischen Funktionsmoduls 2, bei der auf einer dünnen Träger-Polymerfolie 2a (PVB) mit einer Dicke von ca. 50 µm mittels eines Druckverfahrens eine in quadratischer Grundform spiralig verlaufende Antennenleitung 2b derart aufgedruckt ist, dass diese allseitig einen in der Mitte platzierten Temperatursensor 2c umgibt. Der Leiterzug der Antennenleitung 2b kann durch ein für diese Zwecke an sich bekanntes Druckverfahren aus einer leitfähigen Paste oder Tinte gebildet sein, und der Temperatursensor 2c ist insbesondere mittels leitfähiger Klebepunkte mit der Antennenleitung verbunden.

In Fig. 2b ist gezeigt, wie dieses elektronische Funktionsmodul 2 in den Ausschnitt 1d der Verbundglasscheibe 1 eingefügt ist. Es ist zu erkennen, dass als Verbindungsfolie zwischen der ersten und zweiten Glasscheibe 1a, 1b hier ein zweischichtiges Laminat 1c aus zwei verschiedenen PVB-Folien dient, die sich in ihren physikalischen Eigenschaften unterscheiden und als Laminat eine optimale Eigenschafts-Kompensation als Zwischenschicht der Verbundglasscheibe bieten.

Es ist weiterhin zu erkennen, dass die dünne PVB-Trägerfolie 2a des Funktionsmoduls 2 an den Rändern des Ausschnitts 1d allseitig bis unter das Verbindungs-Laminat 1c reicht. Der Überlappungsbereich kann zweckmäßigerweise 2 - 3 mm betragen. Zu erkennen ist außerdem, dass zwischen dem äußersten Abschnitt der Antennenleitung 2b und dem Umfang des Ausschnitts 1d ein Abstand besteht, der sinnvollerweise im Bereich zwischen 2 und 5 mm liegen kann.

Oberhalb des Funktionsmoduls ist auf der Unterseite der zweiten Glasscheibe 1b eine dünne PVB-Schutzfolie 2d angeordnet. Diese ist hier ebenfalls überlappend mit dem Verbindungs-Laminat 1c ausgeführt, dies ist jedoch nicht erfindungswesentlich. Da die Schutz-Polymerfolie 2d zum Schutz des Temperatursensors 2c dient, wäre auch eine Bemessung ausreichend, mit der dessen Oberflächen, nicht aber die Antennenleitung, abgedeckt ist.

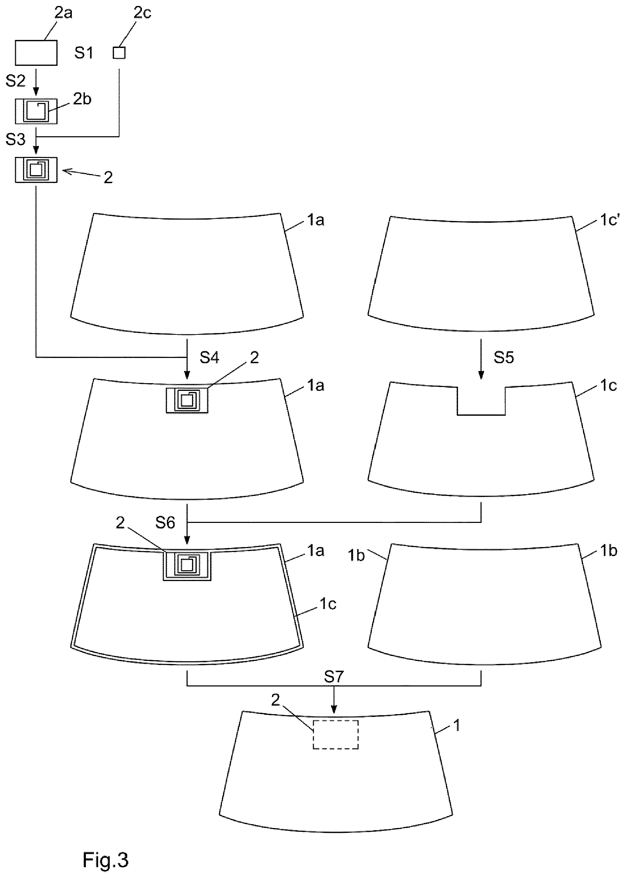

Fig. 3 zeigt schematisch wesentliche Schritte der Herstellung der in Fig. 1 gezeigten Verbundglasscheibe.

In einem Schritt S1 werden eine dünne PVB-Trägerfolie 2a und ein elektronisches Funktionselement 2c (etwa der oben erwähnte Temperatursensor) bereitgestellt. In einem zweiten Schritt wird die Träger-Polymerfolie 2a durch ein geeignetes Druckverfahren (z. B. Siebdruck oder Inkjet) mit einer Leiterstruktur 2b (etwa der oben erwähnten Antennenleitung) versehen, und in einem Schritt S3 wird die Funktionseinheit 2c auf die Träger-Polymerfolie 2a aufgebracht, dort fixiert und mit der Leiterstruktur elektrisch verbunden. Damit ist das elektronische Funktionsmodul 2 einbaufertig.

Anschließend wird in einem Schritt S4 auf einem vorbestimmten Montageplatz auf einer vorab bereitgestellten ersten Glasscheibe 1a das elektronische Funktionsmodul 2 aufgebracht. Anschließend kann auf das Funktionsmodul eine (nicht gezeigte) Schutz-Polymerfolie oder auch eine schützende Elastomerschicht aufgebracht werden.

Eine vorab äußerlich zugeschnittene PVB-Verbindungsfolie 1c' wird in einem Schritt S5 mit einem an die lateralen Abmessungen und die Montageposition des elektronischen Funktionsmoduls 2 angepassten Ausschnitt 1d versehen und ergibt die vorkonfigurierte PVB-Verbindungsfolie 1c, wie in Fig. 1 gezeigt.

In einem ersten Schritt S6 eines sog. Inline-Prozesses wird die konfigurierte PVB-Verbindungsfolie 1c auf die erste Glasscheibe 1a aufgebracht, und in einem anschließenden Schritt S7 wird die zweite Glasscheibe 1b aufgesetzt, und der Stapel wird in üblicher Weise zur Verbundglasscheibe 1 laminiert.

Bei diesem Laminier-Vorgang ist durch den hinreichend groß dimensionierten Ausschnitt 1d in der PVB-Verbindungsfolie 1c, in Verbindung mit dem Einsatz der dünnen PVB-Trägerfolie des Funktionsmoduls 2 innerhalb dieses Ausschnitts, sichergestellt, dass ein Fließen der PVB-Verbindungsfolie nicht zu einer mechanischen Beeinflussung des Funktionsmoduls und insbesondere von dessen Leiterstruktur führt. Deren vollständige Leistungsfähigkeit und uneingeschränkte Zuverlässigkeit wird somit durch die vorliegende Erfindung gewährleistet.

### Versuche

Es wurden verschiedene Versuche durchgeführt. Die dabei gemachten Beobachtungen werden im folgenden dargestellt.
- Die Verwendung einer Verbindungs-Polymerfolie oder ein Verbindungs-Laminat 1c mit einer Dicke, welche geringer war als die Dicke des Funktionsmoduls, führte beim Laminieren zu Glasbruch. Dies konnte dadurch vermieden werden, dass eine Verbindungs-Polymerfolie oder ein Verbindungs-Laminat 1c eingesetzt wurde mit einer Dicke, die größer oder gleich der Dicke des Funktionsmoduls war.
- Bei einer Lamination im Autoklaven bei 12 bar und 130°C über einen Zeitraum von einer Stunde wurde beobachtet, dass die Leiterstrukturen mitunter verformt werden. Dies konnte dadurch vermieden werden, dass die Lamination ohne Autoklav unter Vakuum bei einer Temperatur von beispielsweise 90°C durchgeführt wurde. Dafür waren längere Laminierzeiten erforderlich von mindestens 2 Stunden.
- Wurde der Ausschnitt 1d der Verbindungs-Polymerfolie oder des Verbindungs-Laminats 1c so klein gewählt, dass er zwar das Funktionselement, nicht aber die Leiterstruktur der Antenne beinhaltete, so wurde mitunter beobachtet, dass die Leiterstruktur deformiert war. Die Erfinder führen diesen Effekt auf eingeschlossene Luft zurück. Dies konnte dadurch vermieden werden, dass sowohl Funktionselement als auch Leiterstruktur der Antenne vollständig innerhalb des Ausschnitts 1d angeordnet wurden.
- Die Verwendung einer Schutz-Polymerfolie 2d führte zu einer verbesserten Ästhetik. Insbesondere waren die Kante der Träger-Polymerfolie weniger deutlich sichtbar.

Die Ausführung der Erfindung ist nicht auf das oben erläuterte Beispiel beschränkt, sondern ebenso in einer Vielzahl von Abwandlungen möglich, die im Rahmen der anhängenden Ansprüche liegen.

### Bezugszeichenliste

- 1: Verbundglasscheibe
- 1a, 1b: erste und zweite Glasscheibe
- 1c: Verbindungs-Polymerfolie (PVB-Folie) bzw. Verbindungs-Laminat
- 1c': unkonfigurierte Verbindungs-Polymerfolie
- 1d: Ausschnitt in der Polymerfolie
- 2: elektronisches Funktionsmodul
- 2a: Träger-Polymerfolie
- 2b: Leiterstruktur (Antennenleitung)
- 2c: Funktionselement (Temperatursensor)
- 2d: Schutz-Polymerfolie

## Patentansprüche

1. Verbundglasscheibe (1), die zwei Glas- oder Polymerscheiben (1a, 1b) und mindestens eine zwischen diese eingeklebte Verbindungs-Polymerfolie oder ein Verbindungs-Laminat (1c) aufweist, wobei in einem Teil-Flächenbereich der Verbundglasscheibe (1) ein Ausschnitt (1d) der Verbindungs-Polymerfolie oder des Verbindungs-Laminats (1c) vorgesehen und in dem Ausschnitt (1d) ein elektronisches Funktionsmodul (2) untergebracht ist, welches eine Dicke aufweist, die kleiner oder gleich der Dicke der Verbindungs-Polymerfolie oder des Verbindungs-Laminats (1c) ist, wobei das Funktionsmodul (2) ein elektronisches Funktionselement (2c) aufweist, das auf einer separaten dünnen Träger-Polymerfolie (2a), insbesondere mit einer Dicke im Bereich zwischen 30 und 70 µm, auf einer der Glas- oder Polymerscheiben (1a, 1b) fixiert ist,
wobei das Funktionselement (2c) zusammen mit einer Antenne (2b), welche eng benachbarte Leiterzüge umfasst, auf der Träger-Polymerfolie (2a) angeordnet ist,
wobei die Antenne (2b) auf die Träger-Polymerfolie (2a) aufgedruckt ist,
wobei die Antenne (2b) einen spiralförmigen oder eckig-spiralförmigen Leiterzug aufweist, der das Funktionselement (2c) umgibt.

2. Verbundglasscheibe (1) nach Anspruch 1, wobei das elektronisches Funktionselement (2c) und die Antenne (2b) vollständig innerhalb des Ausschnitt (1d) angeordnet sind.

3. Verbundglasscheibe (1) nach Anspruch 1 oder 2, wobei das Funktionselement (2c) eine größere Dicke aufweist als die Antenne (2b).

4. Verbundglasscheibe (1) nach einem der Ansprüche 1 bis 3, wobei die Träger-Polymerfolie (2a) direkt an der besagten Glas- oder Polymerscheibe (1a) angebracht ist.

5. Verbundglasscheibe (1) nach einem der Ansprüche 1 bis 4, wobei im Ausschnitt (1d) zwischen dem Funktionselement (2c) und der anderen der Glas- oder Polymerscheiben (1a, 1b) eine dünne Schutz-Polymerfolie (2d), insbesondere mit einer Dicke im Bereich zwischen 30 und 70 µm, angeordnet ist, welche bevorzugt direkt an der besagten anderen Glas- oder Polymerscheibe (1b) angebracht ist.

6. Verbundglasscheibe (1) nach einem der Ansprüche 1 bis 5, wobei das Funktionselement (2c) ausgebildet ist als Feuchtigkeitssensor, Lichtsensor, Temperatursensor, Aktuator, eine elektronische Verarbeitungs- oder Schalteinheit, LCD-Anzeigeeinheit und/oder eine LED-Anzeigeeinheit.

7. Verbundglasscheibe (1) nach Anspruch 6, wobei das Funktionselement (2c) ausgebildet ist als Temperatursensor.

8. Verbundglasscheibe (1) nach einem der Ansprüche 1 bis 7, wobei die Dicke der Verbindungs-Polymerfolie oder des Verbindungs-Laminats (1c) und des elektronischen Funktionsmoduls (2) kleiner als 1,2 mm ist, insbesondere im Bereich zwischen 0,6 mm und 1,0 mm, liegt.

9. Verbundglasscheibe (1) nach einem der Ansprüche 1 bis 8, wobei die Träger-Polymerfolie (2a) an den Rändern des Ausschnitts (1d) überlappend mit der Verbindungs-Polymerfolie (1c) aufgebracht ist.

10. Verbundglasscheibe (1) nach einem der Ansprüche 1 bis 9, wobei der Ausschnitt (1d) einen Flächenanteil von weniger als 10 %, insbesondere weniger als 5 %, der Fläche der Verbundglasscheibe hat.

11. Fahrzeug, insbesondere Straßenfahrzeug, mit mindestens einer Verbundglasscheibe (1) nach einem der vorangehenden Ansprüche.

12. Verfahren zur Herstellung einer Verbundglasscheibe (1) nach einem der Ansprüche 1 bis 10, umfassend die Schritte:
- Bereitstellen einer ersten und zweiten Glas- bzw. Polymerscheibe (1a, 1b),
- Bereitstellen einer Verbindungs-Polymerfolie oder eines Verbindungs-Laminats (1c) zur Verbindung der ersten und zweiten Glas- oder Polymerscheibe, mit einem darin vorgesehenen Ausschnitt (1d),
- Bereitstellen eines elektronischen Funktionselements (2c) auf einer dünnen Träger-Polymerfolie (2a) als elektronisches Funktionsmodul (2), dessen Gestalt auf die Gestalt des Ausschnitts (1d) in der Verbindungs-Polymerfolie oder dem Verbindungs-Laminat (1c) abgestimmt und dessen Dicke kleiner als die Dicke der Verbindungs-Polymerfolie oder des Verbindungs-Laminats (1c) ist, wobei eine Antenne (2b), welche eng benachbarte Leiterzüge umfasst, auf die Träger-Polymerfolie (2a) aufgedruckt ist, welche einen spiralförmigen oder eckig-spiralförmigen Leiterzug aufweist, der das Funktionselement (2c) umgibt,
- Aufsetzen des elektronischen Funktionselements (2c) mit der darunter liegenden Träger-Polymerfolie (2a) auf eine Oberfläche der ersten oder zweiten Glas- oder Polymerscheibe (1a, 1b),
- Aufkleben der Verbindungs-Polymerfolie bzw. des Verbindungs-Laminats (1c) auf die gleiche Oberfläche der ersten oder zweiten Glas- oder Polymerscheibe (1a, 1b), und
- Laminieren des Verbundes mit der aufgelegten zweiten Glas- oder Polymerscheibe (1a, 1b) zur Fertigstellung der Verbundglasscheibe (1).

13. Verfahren nach Anspruch 12, wobei nach dem Schritt des Aufsetzens des elektronischen Funktionselements (2c) mit der darunter liegenden Träger-Polymerfolie (2a) auf eine Oberfläche der ersten oder zweiten Glas- oder Polymerscheibe (1a, 1b) und des Aufkleben der Verbindungs-Polymerfolie bzw. des Verbindungs-Laminats (1c) ein Schritt des Abdeckens des elektronischen Funktionselements (2c) mit einer dünnen Schutz-Polymerfolie (2d) ausgeführt wird.

14. Verfahren nach Anspruch 12 oder 13, wobei das Laminieren des Verbundes bei einer Temperatur von weniger als 120°C durchgeführt wird, bevorzugt weniger als 100°C.

15. Verfahren nach einem der Ansprüche 12 bis 14, wobei das Laminieren bei vermindertem Druck über einen Zeitraum von 2 Stunden bis 20 Stunden erfolgt ohne Verwendung eines Autoklaven erfolgt.

## Claims

1. Laminated glass pane (1) that has two glass or polymer panes (1a, 1b) and at least one connecting polymer film or connecting laminate (1c) adhesively bonded therebetween,
wherein a cut-out (1d) in the connecting polymer film or in the connecting laminate (1c) is provided in a partial surface area of the laminated glass pane (1), and an electronic functional module (2) that has a thickness smaller than or equal to the thickness of the connecting polymer film or the connecting laminate (1c) is accommodated in the cut-out (1d),
wherein the functional module (2) has an electronic functional element (2c) that is fixed on a separate thin carrier polymer film (2a), in particular with a thickness in the range between 30 and 70 µm, on one of the glass or polymer panes (1a, 1b),
wherein the functional element (2c) is arranged on the carrier polymer film (2a) together with an antenna (2b) that comprises closely adjacent conductor paths,
wherein the antenna (2b) is printed onto the carrier polymer film (2a),
wherein the antenna (2b) has a spiral or polygonal-spiral conductor path that surrounds the functional element (2c).

2. Laminated glass pane (1) according to claim 1, wherein the electronic functional element (2c) and the antenna (2b) are arranged completely within the cut-out (1d).

3. Laminated glass pane (1) according to claim 1 or 2, wherein the functional element (2c) has a greater thickness than the antenna (2b).

4. Laminated glass pane (1) according to one of claims 1 through 3, wherein the carrier polymer film (2a) is attached directly to said glass or polymer pane (1a).

5. Laminated glass pane (1) according to one of claims 1 through 4, wherein a thin protective polymer film (2d), in particular with a thickness in the range between 30 and 70 µm and that is preferably attached directly to the other glass or polymer pane (1b) is arranged in the cut-out (1d) between the functional element (2c) and said other one of the glass or polymer panes (1a, 1b).

6. Laminated glass pane (1) according to one of claims 1 through 5, wherein the functional element (2c) is implemented as a moisture sensor, a light sensor, a temperature sensor, an actuator, an electronic processing or switching unit, an LCD display unit, and/or an LED display unit.

7. Laminated glass pane (1) according to claim 6, wherein the functional element (2c) is implemented as a temperature sensor.

8. Laminated glass pane (1) according to one of claims 1 through 7, wherein the thickness of the connecting polymer film or the connecting laminate (1c) and the electronic functional module (2) is less than 1.2 mm, in particular is in the range between 0.6 mm and 1.0 mm.

9. Laminated glass pane (1) according to one of claims 1 through 8, wherein the carrier polymer film (2a) is applied at the edges of the cut-out (1d) overlapping with the connecting polymer film (1c).

10. Laminated glass pane (1) according to one of claims 1 through 9, wherein the cut-out (1d) has an area proportion of less than 10%, in particular less than 5%, of the area of the laminated glass pane.

11. Vehicle, in particular a road vehicle, having at least one laminated glass pane (1) according to one of the preceding claims.

12. Method for producing a laminated glass pane (1) according to one of claims 1 through 10, comprising the steps:
- Providing a first and second glass or polymer pane (1a, 1b),
- Providing a connecting polymer film or a connecting laminate (1c) for bonding the first and second glass or polymer pane, having a cut-out (1d) provided therein,
- Providing an electronic functional element (2c) on a thin carrier polymer film (2a) as an electronic functional module (2), whose shape matches the shape of the cut-out (1d) in the connecting polymer film or the connecting laminate (1c) and whose thickness is smaller than the thickness of the connecting polymer film or the connecting laminate (1c), wherein an antenna (2b) that comprises closely adjacent conductor paths is printed onto the carrier polymer film (2a), which has a spiral or polygonal-spiral conductor path that surrounds the functional element (2c),
- Placing the electronic functional element (2c) with the underlying carrier polymer film (2a) on a surface of the first or second glass or polymer pane (1a, 1b),
- Adhering the connecting polymer film or the connecting laminate (1c) on the same surface of the first or second glass or polymer pane (1a, 1b), and
- Laminating the composite with the second glass or polymer pane (1a, 1b) placed thereon to complete the laminated glass pane (1).

13. Method according to claim 12, wherein after the step of placing the electronic functional element (2c) with the underlying carrier polymer film (2a) on a surface of the first or second glass or polymer pane (1a, 1b) and adhering the connecting polymer film or the connecting laminate (1c), a step of covering the electronic functional element (2c) with a thin protective polymer film (2d) is carried out.

14. Method according to claim 12 or 13, wherein the laminating of the composite is carried out at a temperature of less than 120 °C, preferably less than 100 °C.

15. Method according to one of claims 12 through 14, wherein the laminating is done at a reduced pressure over a period of 2 hours to 20 hours without using an autoclave.

## Revendications

1. Vitrage feuilleté (1) présentant deux vitres en verre ou en polymère (1a, 1b) et au moins un film polymère de liaison ou un stratifié de liaison (1c) collé entre celles-ci,
dans lequel une découpe (1d) du film polymère de liaison ou du stratifié de liaison (1c) est prévue dans une zone de surface partielle du vitrage feuilleté (1) et un module fonctionnel (2) électronique est logé dans la découpe (1d), lequel présente une épaisseur qui est inférieure ou égale à l'épaisseur du film polymère de liaison ou du stratifié de liaison (1c),
dans lequel le module fonctionnel (2) présente un élément fonctionnel (2c) électronique qui est fixé sur un film polymère de support (2a) mince séparé, en particulier comportant une épaisseur dans la plage comprise entre 30 et 70 µm, sur l'une des vitres en verre ou en polymère (1a, 1b),
dans lequel l'élément fonctionnel (2c) est disposé sur le film polymère de support (2a) conjointement avec une antenne (2b) qui comprend des pistes conductrices étroitement adjacentes,
dans lequel l'antenne (2b) est imprimée sur le film polymère de support (2a), dans lequel l'antenne (2b) présente une piste conductrice en forme de spirale ou de spirale carrée qui entoure l'élément fonctionnel (2c).

2. Vitrage feuilleté (1) selon la revendication 1, dans lequel l'élément fonctionnel (2c) électronique et l'antenne (2b) sont entièrement disposés à l'intérieur de la découpe (1d).

3. Vitrage feuilleté (1) selon la revendication 1 ou 2, dans lequel l'élément fonctionnel (2c) présente une épaisseur supérieure à celle de l'antenne (2b).

4. Vitrage feuilleté (1) selon l'une des revendications 1 à 3, dans lequel le film polymère de support (2a) est appliqué directement sur ladite vitre en verre ou en polymère (1a).

5. Vitrage feuilleté (1) selon l'une des revendications 1 à 4, dans lequel est disposé dans la découpe (1d), entre l'élément fonctionnel (2c) et l'autre vitre parmi les vitres en verre ou en polymère (1a, 1b), un film polymère de protection (2d) mince, en particulier comportant une épaisseur dans la plage comprise entre 30 et 70 µm, de préférence appliqué directement sur ladite autre vitre en verre ou en polymère (1b).

6. Vitrage feuilleté (1) selon l'une des revendications 1 à 5, dans lequel l'élément fonctionnel (2c) est réalisé sous la forme d'un capteur d'humidité, d'un capteur de lumière, d'un capteur de température, d'un actionneur, d'une unité de traitement ou de commutation électronique, d'une unité d'affichage LCD et/ou d'une unité d'affichage DEL.

7. Vitrage feuilleté (1) selon la revendication 6, dans lequel l'élément fonctionnel (2c) est réalisé comme un capteur de température.

8. Vitrage feuilleté (1) selon l'une des revendications 1 à 7, dans lequel l'épaisseur du film polymère de liaison ou du stratifié de liaison (1c) et du module fonctionnel (2) électronique est inférieure à 1,2 mm, en particulier se situe dans la plage comprise entre 0,6 mm et 1,0 mm.

9. Vitrage feuilleté (1) selon l'une des revendications 1 à 8, dans lequel le film polymère de support (2a) est appliqué sur les bords de la découpe (1d) de manière à chevaucher le film polymère de liaison (1c).

10. Vitrage feuilleté (1) selon l'une des revendications 1 à 9, dans lequel la découpe (1d) possède un pourcentage surfacique inférieur à 10 %, en particulier inférieur à 5 %, de la surface du vitrage feuilleté.

11. Véhicule, en particulier véhicule routier, comportant au moins un vitrage feuilleté (1) selon l'une des revendications précédentes.

12. Procédé pour la fabrication d'un vitrage feuilleté (1) selon l'une des revendications 1 à 10, comprenant les étapes consistant à :
- fournir une première et une seconde vitre en verre ou en polymère (1a, 1b),
- fournir un film polymère de liaison ou un stratifié de liaison (1c) pour la liaison des première et seconde vitres en verre ou en polymère, avec une découpe (1d) prévue dans celui-ci,
- fournir un élément fonctionnel (2c) électronique sur un film polymère de support (2a) mince comme module fonctionnel (2) électronique, dont la forme est adaptée à la forme de la découpe (1d) dans le film polymère de liaison ou le stratifié de liaison (1c) et dont l'épaisseur est inférieure à l'épaisseur du film polymère de liaison ou du stratifié de liaison (1c), dans lequel une antenne (2b) comprenant des pistes conductrices étroitement adjacentes est imprimée sur le film polymère de support (2a), laquelle antenne présente une piste conductrice en forme de spirale ou de spirale carrée qui entoure l'élément fonctionnel (2c),
- mettre en place l'élément fonctionnel (2c) électronique avec le film polymère de support (2a) sous celui-ci sur une surface de la première ou de la seconde vitre en verre ou en polymère (1a, 1b),
- coller le film polymère de liaison ou le stratifié de liaison (1c) sur la même surface de la première ou de la seconde vitre en verre ou en polymère (1a, 1b), et
- stratifier le composite avec la seconde vitre en verre ou en polymère (1a, 1b) posée dessus pour achever la fabrication du vitrage feuilleté (1).

13. Procédé selon la revendication 12, dans lequel, après l'étape de mise en place de l'élément fonctionnel (2c) électronique avec le film polymère de support (2a) sous celui-ci sur une surface de la première ou de la seconde vitre en verre ou en polymère (1a, 1b) et de collage du film polymère de liaison ou du stratifié de liaison (1c), une étape de recouvrement de l'élément fonctionnel (2c) électronique avec un film polymère de protection (2d) mince est réalisée.

14. Procédé selon la revendication 12 ou 13, dans lequel la stratification du composite est réalisée à une température inférieure à 120 °C, de préférence inférieure à 100 °C.

15. Procédé selon l'une des revendications 12 à 14, dans lequel la stratification est effectuée sous pression réduite pendant une période allant de 2 heures à 20 heures sans utiliser d'autoclave.
